# EUROPÄISCHE PATENTSCHRIFT

(11) **EP 1 524 428 B1**
(45) Veröffentlichungstag und Bekanntmachung des Hinweises auf die Patenterteilung: **29.07.2009**
(21) Anmeldenummer: 04104646.7
(22) Anmeldetag: 24.09.2004
(51) Int. Cl.: F02M 55/02, F02M 69/46

(54) **Verfahren zur Herstellung eines Volumenspeichers mit planen Montageflächen**
Method of manufacturing an accumulator having plane mounting surfaces
Méthode de fabrication d'un accumulateur ayant des surfaces de montage planes

(30) Priorität: 15.10.2003 DE 10347946
(43) Veröffentlichungstag der Anmeldung: 20.04.2005
(73) Patentinhaber: ROBERT BOSCH GMBH, 70442 Stuttgart (DE)
(72) Erfinder: Mutschler, Jan, 90547, Stein (DE); Eckbauer, Andreas, 90489, Nuernberg (DE); Riemer, Martin, 91301, Forchheim (DE)

(56) Entgegenhaltungen:
- EP-A- 1 318 292
- US-A- 4 899 712
- US-A- 4 928 509
- US-B1- 6 497 128
- PATENT ABSTRACTS OF JAPAN Bd. 2000, Nr. 14, 5. März 2001 (2001-03-05) & JP 2000 304188 A (USUI INTERNATL IND CO LTD), 2. November 2000 (2000-11-02)
- PATENT ABSTRACTS OF JAPAN Bd. 1998, Nr. 12, 31. Oktober 1998 (1998-10-31) & JP 10 196869 A (USUI INTERNATL IND CO LTD), 31. Juli 1998 (1998-07-31)
- PATENT ABSTRACTS OF JAPAN Bd. 015, Nr. 164 (M-1106), 24. April 1991 (1991-04-24) & JP 03 031576 A (FUJI INJIEKUTA KK), 12. Februar 1991 (1991-02-12)

## Beschreibung

### Technisches Gebiet

Verbrennungskraftmaschinen können nach dem Prinzip der homogenen oder der heterogenen Gemischbildung betrieben werden. Bei der homogenen Gemischbildung wird ein homogenes Kraftstoff/Luftgemisch in den Brennraum eingebracht, während bei der heterogenen Gemischbildung in die im Brennraum vorverdichtete Verbrennungsluft Kraftstoff direkt eingespritzt wird. Bei der Benzindirekteinspritzung erfolgt das Einspritzen von Kraftstoff, ausgehend von einem Volumenspeicher, über Hochdruckeinspritzventile oder Injektoren in den Brennraum. Dabei sind Drücke von mehr als 5 MPa zu beherrschen.

### Stand der Technik

Gemäß bisher angewendeter Herstellungsverfahren für Volumenspeicher, die im Rahmen der Benzindirekteinspritzung eingesetzt werden können, wurden Formkörper aus dem Vollen gefräst oder über Löttechnik aus Einzelteilen zusammengesetzt. Aus Gründen der Materialbeständigkeit werden die Formkörper, aus denen die Volumenspeicher im Wege des Zerspanens hergestellt werden, aus nicht rostenden Edelstählen gefertigt. Der bei der Zerspanung entstehende Materialabfall macht dieses Herstellungsverfahren uninteressant, da zu viel zerspantes Material entsteht, was zuvor teuer eingekauft wurde. Für Volumenspeicher eingesetzte Formkörper werden gemäß weiteren aus dem Stand der Technik bekannten Herstellungsverfahren als Lötrohre gefertigt. Bei diesem Verfahren ist es notwendig, tassenförmige Haltekörper aufwendig zu zerspanen, da es nicht möglich ist, eine Wölbung des Rohres als Tiefziehteil herzustellen. Bei dieser Verbindungstechnik ist es notwendig, den Lötspalt hinsichtlich der auftretenden Toleranzen möglichst gering zu halten. Dies ist erforderlich, um eine Dauerfestigkeit gegenüber den hohen Betriebsdrücken und den auftretenden Pulsationen zu erhalten.

In dem Patent US 6,497,128 B1 wird ein Verfahren zum Herstellen eines Kraftstoffverteilerrohres angegeben. Das gezeigte Herstellungsverfahren umfasst einen anfänglichen Hydroformschritt zur Verformung eines mittleren Abschnitts eines Werkstücks, derart, dass dieses ein oder mehrere nach außen verlaufende Verzweigungsstellenabschnitte hat. In einem anschließenden Hydroformschritt werden ein oder mehrere Endabschnitte des Werkstücks verformt, um zusätzliche nach außen verlaufende Verzweigungsstellenabschnitte zu erhalten. Das verformte Werkstück wird anschließend auf übliche Weise maschinell bearbeitet und/oder es erfolgt eine Nletallbearbeitung, um in die Verzweigungsstellenabschnitte Kraftstoffeinspritzventile einsetzen zu können.

DE 3918410 A1 zeigt eine Kraftstoffeinspritzeinrichtung für Brennkraftmaschinen. Diese weist einen Kraftstoffverteiler auf, der eine Mehrzahl von Anschlussstutzen mit radial überstehende Verriegelungsbünden trägt. Eine Mehrzahl von als top-feed-Ventilen ausgebildeten Kraftstoffeinspritzventilen ist vorgesehen, die in den Anschlussstutzen flüssigkeitsdicht eingesetzt sind. Zur Halterung der Kraftstoffeinspritzventile in Achsrichtung sowie zur Sicherung der Kraftstoffeinspritzventile gegen Verdrehung in Umfangsrichtung, ist jeweils ein Verbindungsglied vorgesehen, das in eine Umfangsnut im Ventilgehäuse eingreift und den Verriegelungsbund übergreift. Zusätzlich weist das Verbindungsglied zwei Fixierelemente auf, die jeweils eines der Formelemente, zumindest in Umfangsrichtung, formschlüssig umgreifen, die am Ventilgehäuse einerseits und am Anschlussstutzen andererseits an definierten Positionen angebracht sind. Aus DE 39 18410 A1 geht eine Ventiltasse hervor, die einen seitlichen Ansatz aufweist, der von einer Federklammer umgriffen wird, zur zusätzlichen Sicherung des in die Ventiltasse eingesetzten Kraftstoffeinspritzventils in Umfangsrichtung.

DE 196 07 521 C1 zeigt ein Kraftstoffrohr, an welchem Nippel zum Anschluss von Abzweigrohren vorgesehen sind. Um eine Gewindebüchse, welche eine durchgehende Innenbohrung aufweist, an das Verteilerrohr aufzuschweißen, ist an diesem eine im Grundriss beispielsweise rechteckig ausgebildete Vertiefung vorgesehen, die von außen her mit geringer Tiefe in die Mantelfläche des Verteilerrohres eingearbeitet ist Dadurch wird eine ebene Aufsatzfläche für eine Gewindebuchse geschaffen, die mit ihrem einen Stirnende stumpf auf diese ebene Aufsatzfläche aufsetzt und mit dem Verteilerrohr, beispielsweise durch eine Schweißung, stoffschlüssig verbunden ist.

### Darstellung der Erfindung

Mit der efindungsgemäß vorgeschlagenen Lösung wird ein Verfahren gemäß Anspruch 1 bereitgestellt, mit welchem an einem Formkörper, wie er beispielsweise durch einen verformbaren rohrförmigen Körper dargestellt wird, erhabene Montageflächen ausgebildet werden können. Besonders vorteilhaft ist es, dass die erhaben hervorstehenden, eben ausgebildeten Montageflächen in einem Abstand voneinander am rohrförmigen Formkörper ausgebildet werden können, der in vorteilhafter Weise dem Abstand von Bohrungen am Zylinderkopf einer Verbrennungskraftmaschine entspricht. So können an einem Formkörper, der beispielsweise als Kraftstoffverteiler für eine mehrzylindrige Brennkraftmaschine dient, mehrere, entsprechend der Zylinderzahl der mit Kraftstoff zu versorgenden Verbrennungskraftmaschine erhaben hervorstehende ebene Montageflächen erzeugt werden: Da der rohrförmig ausgebildete Formkörper nur partiell verformt wird, bleibt dessen runde Kontur in den nicht verformten Bereichen weitestgehend erhalten, was der Festigkeit, und insbesondere der

Druckfestigkeit eines derart hergestellten Formkörpers, wie z.B. eines Kraftstoffverteilers, in vorteilhafter Weise zugute kommt.

Darüber hinaus bietet die lediglich partielle Verformung, d.h. Ausbildung radial erhaben hervorstehender ebener Montagefläche den Vorteil, dass die runde Kontur des Formkörpers an den Endstücken gewahrt bleibt, so dass die Endstücke durch einfache, als Drehteile herstellbare Deckelelemente verschlossen werden können.

Die erfindungsgemäß vorgeschlagene Lösung erlaubt den Verzicht auf bisher eingesetzte Techniken, wie z.B. den aus dem Vollen Fräsen bei spanabhebenden Fertigungsverfahren sowie eine Verbesserung der bisher eingesetzten Löttechnik. Bei der Innenhochdruckverformung von einen Hohlraum aufweisenden Bauteilen werden in der Regel Halbzeuge eingesetzt, die bereits zu einem bestimmten Grad vorverformt sind, so dass bei Anwendung des Innenhochdruckverformens die endgültige Form der Bauteile erreicht werden kann.

Wird ein beispielsweise tiefgezogenes Rohr über Innenhochdruckverformung partiell verformt, so dass im Abstand vom Zylinderkopf vorgegebenen Bohrungen der Verbrennungskraftmaschine plane Ebenen, d.h. planradial hervorstehende Montageflächen entstehen, gefertigt, können auf diesen Aufnahmeelemente, wie beispielsweise tassenförmige Körper, aufgebracht werden. In vorteilhafter Weise weisen die Aufnahmekörper, wie z.B. Ventiltassen, die einen Kraftstoffinjektor an einem Ende teilweise umschließen, Schweißwarzen auf, die mittels Kondensator-Entladungs-Schweißen oder ähnlichen Schweißverfahren angebracht werden können. Wird das Halteelement, beispielsweise ein Ventiltasse, mit der ebenen Montagefläche, durch welche eine Durchgangsbohrung verläuft, beispielsweise verschweißt, so ist durch diese stoffschlüssige Verbindung eine druckdichte Verbindung zwischen den dem Kraftstoffinjektor teilweise umschließenden Halteelement und dem mit Kraftstoff beaufschlagten rohrförmigen Körper gegeben, die insbesondere druckdicht gegenüber dem im rohrförmigen Körper herrschenden Innendruck ist.

Anstelle des erwähnten Kondensator-Entladungs-Schweißens kann die stoffschlüssige Verbindung auch durch andere gängige Schweißverfahren oder durch Einsatz der Löttechnik hergestellt werden.

### Zeichnung

Anhand der Zeichnung wird die Erfmdung nachstehend eingehender beschrieben.

Es zeigt:
- Figur 1: einen partiell innenhochdruckverformten rohrförmigen Körper mit ebenen Montageflächen,
- Figur 2: den durch Innenhochdruck partiell verformten rohrförmigen Körper mit an den ebenen Montage stoffschlüssig aufgenommenen Haltekörpern,
- Figur 3: einen Querschnitt der Anordnung gemäß Figur 2 und
- Figur 4: eine Außenansicht eines durch Innenhochdruckbeaufschlagung partiell verformten Formkörpers mit an ebenen Montageflächen stoffschlüssig aufgenommenen Haltekörpern.

### Ausfuhrungsvarianten

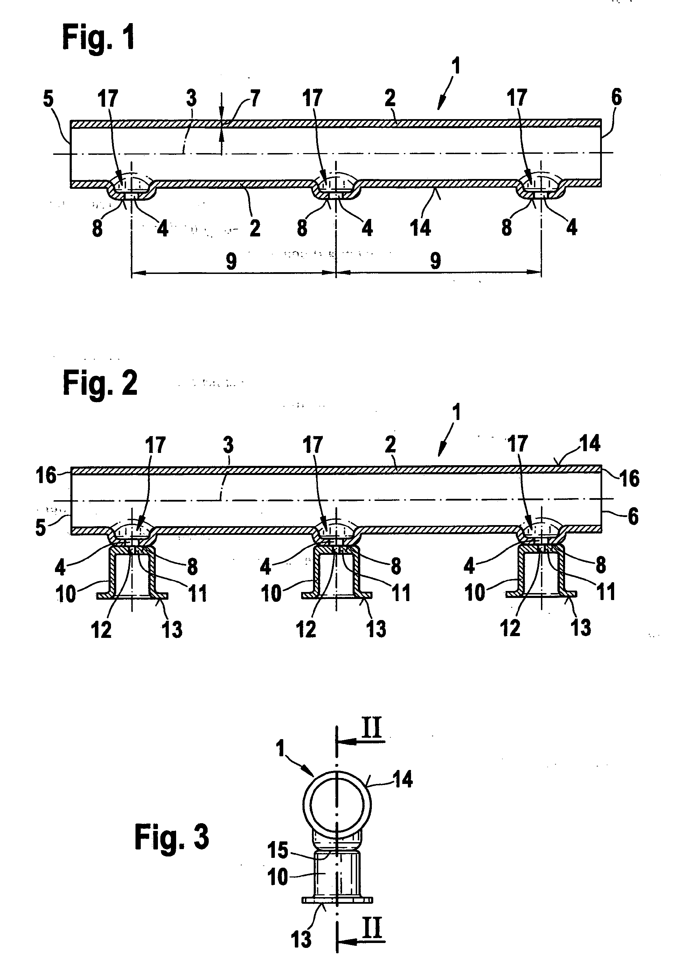

Figur 1 zeigt einen rohrförmigen Körper, der partiell durch Innenhochdruckbeaufschlagung derart verformt ist, dass voneinander in einem definierten Abstand liegende, ebene Montageflächen entstehen.

Ein Rohrkörper 1, bei dem es sich beispielsweise um ein tiefgezogenes Rohr einer vorgegebenen Wanddicke 7 handeln kann, ist durch seine Rohrwand 2 begrenzt. Der Rohrkörper 1 ist im wesentlichen symmetrisch zu seiner Symmetrieachse 3. In die Rohrwand 2 sind Bohrungen 4 oder anders hergestellte Öffnungen eingelassen, welche in einem Abstand 9 voneinander beabstandet sind. Der in Figur 1 dargestellte Rohrkörper 1 weist ein erstes Rohrende 5 sowie ein zweites Rohrende 6 auf.

Durch Innenhochdruckbeaufschlagung des Hohlraumes, des Rohrkörpers 1, d.h. nach Verschließen des ersten Rohrendes 5 bzw. des zweiten Rohrendes 6 und Einbringen eines Innenhochdruckumformmediums, wird der Rohrkörper 1 innerhalb einer Matrize oder eines Formwerkzeuges derart verformt, dass im Abstand 9 voneinander liegende ebene Planflächen 8 in radiale Richtung domförmig hervorstehend ausgebildet werden.

Die Bereiche der Rohrwand 2, an welchen die ebenen Montageflächen 8 ausgebildet werden, sind durch Bezugszeichen 17 gekennzeichnet. Zwischen den einzelnen Bohrungen 4 der Rohrwand 2 ist der Rohrkörper 1 im wesentlichen unverformt, d.h. weist keine verformte Mantelfläche 14 auf, die bei einem Rohrkörper 1 im wesentlichen einen zylindrischen Querschnitt aufweist.

Figur 2 zeigt eine partiell innenhochdruckverformten Rohrkörper, an welchem plan ausgebildete Montageflächen ausgebildet sind, an welche wiederum tassenförmig ausgebildete Haltekörper angebracht sind.

Der Darstellung gemäß Figur 2 ist entnehmbar, dass an die ebenen, domförmig radial hervorstehenden Planflächen 8, Aufnahmekörper 10, bei denen es sich beispielsweise um Ventiltassen handeln kann, angebracht sind. Die eben ausgebildeten Planflächen 8 ermöglichen es in vorteilhafter Weise, dass auf diesen Planflächen 8 Haltekörper 10, die tassenförmig ausgebildet sind, angeschweißt werden können. Die tassenförmig ausbildbaren Haltekörper 10 weisen eine Schweißwarze auf, die mittels Kondensator-Entladungs-Schweißen oder einem ähnlichen stoffschlüssigen Fügeverfahren mit der eben ausgebildeten Planfläche 8 verbunden werden kann. Eine durch Kondensator-Entladungs-Schweißen hergestellte stoffschlüssige Verbindung 15 ist insbesondere druckdicht gegenüber dem anstehenden Innendruck, welcher im Innenraum des hohlförmigen Rohrkörpers 1 herrscht. Die Druckfestigkeit einer durch Kondensator-Entladungs-Schweißen oder durch ein anderes Schweißverfahren erhaltenen stoffschlüssigen Verbindung 15 liegt erheblich über der Druckfestigkeit, die mittels eines stoffschlüssigen Fügeverfahrens, wie beispielsweise des Lötens, erhalten werden kann.

Ein nach dem erfindungsgemäßen Verfahren hergestellter Kraftstoffverteiler ist demzufolge nicht nur einfacher herstellbar, sondern weist auch eine höhere Druckfestigkeit - über die Betriebszeit eines derartigen Kraftstoffverteilers gesehen - auf. Es kann auf spanabhebende Fertigungsverfahren verzichtet werden, die zwangsläufig mit einer Schwächung der Wandstärke durch Materialabtrag einhergehen. Die bei spanabhebenden Fertigungsverfahren oft entstehenden scharfen Übergänge stellen Kerbwirkungsstellen dar, die beim erfindungsgemäß vorgeschlagenen partiellen Innenhochdruckverformen eines Rohrkörpers 1 ausbleiben, da die Übergänge zwischen der Rohrwand 2 und den planen, in einem Abstand 9 voneinander hergestellten Montageflächen weitestgehend gleichmäßig gekrümmt ausgebildet werden, so dass keine Kerbwirkungsstellen, die die Druckfestigkeit eines Rohrkörpers 1 herabsetzen, entstehen.

Die an den ebenen Planflächen 8, gemäß Figur 2 aufgenommenen, tassenförmig ausgebildeten Haltekörper, weisen jeweils einen Haltekörperboden 11 auf, an welchem eine in Figur 2 nicht dargestellte Schweißwarze angebracht werden kann, um den tassenförmig ausgebildeten Haltekörper im Wege des Kondensator-Entladungs-Schweißens mit den Planflächen 8 stoffschlüssig zu verbinden. An der dem Haltekörperboden 11 gegenüberliegenden Seite weisen die tassenförmig ausgebildeten Halteelemente 10 eine Ansatzfläche 13 auf. In den Haltekörperböden 11 sind Bohrungen oder auf anderem Wege hergestellte Öffnungen 12 vorgesehen, die zu den in die ebenen Planflächen 8 eingebrachten Bohrungen 4 fluchten. Damit ist ein Übergang von Kraftstoff aus einem als Kraftstoffverteiler dienenden Rohrkörper 1 an einen in mit seiner Oberseite im tassenförmig ausgebildeten Haltekörper aufgenommenen Kraftstoffinjektor problemlos möglich. Erforderlichenfalls kann im tassenförmigen Körper ein Dichtelement eingelassen sein, so dass die Übergangsstelle zwischen dem Rohrkörper 1 und dem tassenförmig ausgebildeten Haltekörper 10 gegen Kraftstoffaustritt abgedichtet werden kann.

Der in Figur 2 dargestellte Rohrkörper 1 weist ein erstes Rohrende 5 und ein zweites Rohrende 6 auf, die im wesentlichen als Ringflächen beschaffen sind. In die bei partieller Innenhochdruckbeaufschlagung des Rohrkörpers 1 unverformten Ansatzflächen 16 am ersten Rohrende 5 und am zweiten Rohrende 6 können in vorteilhafter Weise einfache Drehteile eingesetzt werden, so dass der Rohrkörper 1 an seinen Rohrenden 5 und 6 verschlossen werden kann. Dies kann beispielsweise durch eine stoffschlüssige Verbindung einfach konfigurierter und standardmäßiger Drehteile im Wege des Kondensator-Entladungs-Schweißens oder anderer Schweißverfahren erfolgen. Damit weist der partiell innenhochdruckverformte Rohrkörper 1 an seinen Enden eine einfache Geometrie auf, so dass aufwendige Verschließelemente, die je nach verformtem Profil zu fertigen wären, entbehrlich sind; einfache Standartdrehteile reichen zum Verschließen eines, gemäß des erfmdungsgemäß vorgeschlagenen Verfahrens, partiell innenhochdruckverformten Rohrkörpers 1 aus.

Figur 3 ist ein Querschnitt durch die Anordnung gemäß Figur 2 zu entnehmen. Die stoffschlüssige Verbindung 15 zwischen dem Haltekörperboden 11 und den eben hervorstehenden Planflächen 8 kann mittels des Kondensator-Entladungs-Schweißverfahrens erreicht werden. Die Ansatzfläche 13, die an der Unterseite des tastenförmig ausgebildeten Haltekörpers 10 vorhanden ist, kann als umlaufender Ring oder als einzelne Ringsegmente oder vorstehende Nocken ausgebildet werden. Aus Figur 3 geht der im wesentlichen ringförmige Querschnitt des Rohrkörpers 1, dessen Rohrmantel mit Bezugszeichen 14 gekennzeichnet ist, hervor.

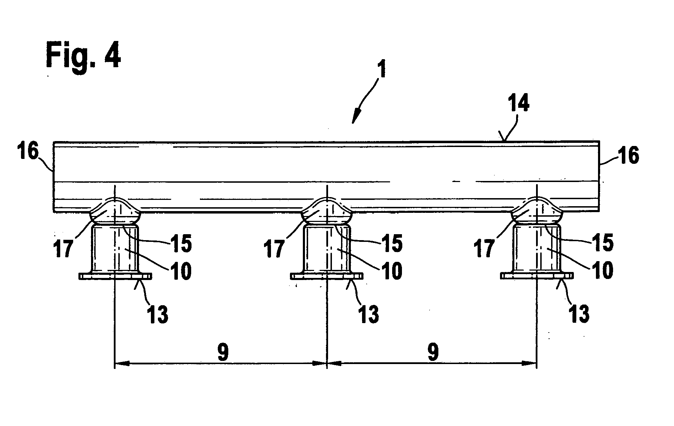

Die Darstellung gemäß Figur 4 zeigt einen partiell innenhochdruckverformten Rohrkörper 1, beispielsweise für eine Kraftstoffverteilereinrichtung, an dessen Planflächen einzelne, tassenförmige Haltekörper angebracht sind.

Die Symmetrieachsen der einzelnen, tassenförmigen Haltekörper 10 sind in einem definierten Abstand 9 voneinander dargestellt. Der Abstand 9 entspricht in vorteilhafter Weise dem Abstand von Bohrungen, die im Zylinderkopf einer Verbrennungskraftmaschine zur Aufnahme von Kraftstoffeinspritzventilen oder Injektoren vorgesehen sind. Nach der Konfiguration des Zylinderkopfbereiches richtet sich der Abstand 9, welchem die tassenförmig ausgebildeten Halteelemente 10 voneinander angeordnet werden, d.h. auch die Bereiche 17, an welchen der Rohrkörper 1 partiell innenhochdruckverformt wird.

Die stoffschlüssige Verbindung 15, kann - wie oben bereits erwähnt durch das Kondensator-Entladungs-Schweißen hergestellt werden - die partiell innenhochdruckverformten Bereiche 17 am Rohrmantel 14 des Rohrkörpers 1 zeichnen sich durch gleichmäßige, kerbungsfreie Übergänge aus. Die Materialstärke der Rohrwand 2 des Rohrkörpers 1 wird durch das gewählte Umformverfahren nicht beeinträchtigt; dessen Druckfestigkeit durch das Fügeverfahren zum Anbringen des tassenförmig ausgebildeten Haltekörpers 10 nicht beeinträchtigt.

Die Aufsatzflächen 16 für als einfache Drehteile beschaffene Deckelelemente am ersten Rohrende 5 bzw. am zweiten Rohrende 6 des Rohrkörpers 1 sind als einfache Ringflächen beschaffen und im wesentlichen unverformt, so dass zur Abdichtung des Rohrkörpers 1 einfache Standardteile eingesetzt werden können.

Neben dem Kondensator-Entladungs-Schweißen kann die stoffschlüssige Fügeverbindung 15 zwischen den ebenen Planflächen 8 und dem Boden der tassenförmigen Halteelemente 10 auch im Wege des Laser-Schweißens oder der Löttechnik herbeigeführt werden. Mit dem Innenhochdruckumformungsverfahren lassen sich auch nicht rostende Edelstähle verformen, aus welchem sich beispielsweise auch Hochdruckspeichervolumen zum Einsatz bei Hochdruckspeichereinspritzsystemen (Common-Rail) herstellen lassen. Wird ein innenhochdruckverformter Rohrkörper 1 bei Kraftstoffversorgungsanlagen, so z.B. bei Benzindirekteinspritzung eingesetzt, vermag dieser Drücken zwischen 5,0 bis 25,0 MPa standzuhalten.

### Bezugszeichenliste

- 1: Rohrkörper
- 2: Rohrwand
- 3: Symmetrieachse
- 4: Bohrung
- 5: erstes Rohrende
- 6: zweites Rohrende
- 7: Wanddicke
- 8: ebene Planfläche
- 9: Abstand Bohrung
- 10: tassenförmige Haltekörper
- 11: Haltekörperboden
- 12: Bohrung Haltekörper
- 13: ringförmige Ansatzfläche
- 14: Rohrmantel
- 15: Fügestelle
- 16: Aufsatzfläche Schließteil
- 17: innenhochdruckverformter Bereich Rohrkörper

## Patentansprüche

1. Verfahren zur Herstellung eines rohrförmigen Volumenspeichers (1) für ein Fluid, mit nachfolgenden Verfahrensschritten:
a) dem partiellen Innenhochdruckverformen eines rohrförmigen Volumenspeichers (1) zur Ausformung in einem Abstand (9) voneinander entfernter Planflächen (8),
b) dem Einbringen von Durchgangsöffnungen (4) in die Planflächen (8) und
c) dem Herstellen einer stoffschlüssigen Verbindung (15) zwischen den Planflächen (8) und Stirnflächen tassenförmiger Halteelemente (10).

2. Verfahren gemäß Anspruch 1, **dadurch gekennzeichnet, dass** Abstände (9) zwischen den voneinander entfernten ebenen Planflächen (8) Abständen von Zylinderkopfbohrungen im Zylinderkopf einer Verbrennungskraftmaschine zueinander entsprechen.

3. Verfahren gemäß Anspruch 1, **dadurch gekennzeichnet, dass** die stoffschlüssige Verbindung (15) mittels Kondensator-Entladungs-Verschweißen hergestellt wird.

4. Verfahren gemäß Anspruch 1, **dadurch gekennzeichnet, dass** die stoffschlüssige Verbindung 15 mittels Laser-Schweißen hergestellt wird.

5. Verfahren gemäß Anspruch 3, **dadurch gekennzeichnet, dass** an den tassenförmigen Halteelementen (10) mindestens eine Schweißwarze angebracht wird.

6. Verfahren gemäß Anspruch 1, **dadurch gekennzeichnet, dass** die stoffschlüssige Verbindung (15) druckdicht ausgebildet wird.

7. Verfahren gemäß Anspruch 1, **dadurch gekennzeichnet, dass** zum Verschließen des Volumenspeichers (1) an dessen unverformten ringförmigen Ansatzflächen (16) Drehteile oder rotationssymmetrische Formteile angebracht werden.

8. Verfahren gemäß einem der vorhergehenden Ansprüche, **dadurch gekennzeichnet, dass** als Fluid ein Kraftstoff einer Klaftstoffversorgungsanlage einer Verbrennungskraftmaschine verwendet wird.

9. Volumenspeicher für Kraftstoff einer Kraftstoffversorgungsanlage einer Verbrennungskraftmaschine hergestellt gemäß einem oder mehrerer der Ansprüche 1 bis 8.

10. Volumenspeicher gemäß Anspruch 9, **dadurch gekennzeichnet, dass** in tassenförmigen Halteelementen (10) Hochdruckeinspritzventile oder Injektoren aufgenommen sind.

## Claims

1. Method for producing a tubular volume accumulator (1) for a fluid, with the following method steps:
a) the partial internal high-pressure forming of a tubular volume accumulator (1) for the shaping of planar surfaces (8) located at a distance (9) from one another,
b) the introduction of through-orifices (4) into the planar surfaces (8), and
c) the production of a material-integral connection (15) between the planar surfaces (8) and end faces of cup-shaped holding elements (10).

2. Method according to Claim 1, **characterized in that** distances (9) between the flat planar surfaces (8) distant from one another correspond to distances of cylinder-head bores in the cylinder head of an internal combustion engine from one another.

3. Method according to Claim 1, **characterized in that** the material-integral connection (15) is produced by means of capacitor discharge welding.

4. Method according to Claim 1, **characterized in that** the material-integral connection (15) is produced by means of laser welding.

5. Method according to Claim 3, **characterized in that** at least one welding bead is formed on the cup-shaped holding elements (10).

6. Method according to Claim 1, **characterized in that** the material-integral connection (15) is of pressure-tight form.

7. Method according to Claim 1, **characterized in that**, for closing the volume accumulator (1), lathe-turned parts or rotationally symmetrical mouldings are attached to its non-formed annular reception surfaces (16).

8. Method according to one of the preceding claims, **characterized in that** the fluid used is a fuel of a fuel supply system of an internal combustion engine.

9. Volume accumulator for fuel of a fuel supply system of an internal combustion engine, produced according to one or more of claims 1 to 8.

10. Volume accumulator according to Claim 9,
**characterized in that** high-pressure injection valves or injectors are received in cup-shaped holding elements (10).

## Revendications

1. Procédé de fabrication d'un accumulateur (1) tubulaire pour un fluide, comprenant les étapes de procédé suivantes :
a) la déformation partielle sous haute pression interne d'un accumulateur tubulaire (1) pour la mise en forme de surfaces planes (8) espacées les unes des autres d'une distance (9),
b) la création d'ouvertures de passage (4) dans les surfaces planes (8) et
c) la fabrication d'une connexion par liaison de matière (15) entre les surfaces planes (8) et les surfaces frontales d'éléments de retenue (10) en forme de tasse.

2. Procédé selon la revendication 1, **caractérisé en ce que** les distances (9) entre les surfaces planes (8) espacées les unes des autres correspondent à des distances d'alésages de culasse dans la culasse d'un moteur à combustion interne.

3. Procédé selon la revendication 1, **caractérisé en ce que** la connexion par liaison de matière (15) est établie au moyen d'un soudage par décharge de condensateur.

4. Procédé selon la revendication 1, **caractérisé en ce que** la connexion par liaison de matière (15) est établie par soudage au laser.

5. Procédé selon la revendication 3, **caractérisé en ce que** l'on applique sur les éléments de retenue (10) en forme de tasse au moins un point de soudage.

6. Procédé selon la revendication 1, **caractérisé en ce que** la connexion par liaison de matière (15) est réalisée de manière étanche à la pression.

7. Procédé selon la revendication 1, **caractérisé en ce que**, pour fermer l'accumulateur (1) au niveau de ses surfaces d'appui (16) annulaires non déformées, on applique des pièces rotatives ou des pièces moulées à symétrie de révolution.

8. Procédé selon l'une quelconque des revendications précédentes, **caractérisé en ce que** l'on utilise comme fluide un carburant d'une installation d'alimentation en carburant d'un moteur à combustion interne.

9. Accumulateur pour du carburant d'une installation d'alimentation en carburant d'un moteur à combustion interne, fabriqué selon l'une quelconque ou plusieurs des revendications 1 à 8.

10. Accumulateur selon la revendication 9, **caractérisé en ce que** des soupapes d'injection haute pression ou des injecteurs sont reçus dans des éléments de retenue (10) en forme de tasse.
